# EUROPÄISCHE PATENTSCHRIFT

(11) **EP 2 886 264 B1**
(45) Veröffentlichungstag und Bekanntmachung des Hinweises auf die Patenterteilung: **22.08.2018**
(21) Anmeldenummer: 14195632.6
(22) Anmeldetag: 01.12.2014
(51) Int. Cl.: B25J 15/00, B25J 15/04, B64G 1/10, B64G 1/64, B64G 4/00

(54) **VORRICHTUNG ZUM BEARBEITEN EINER STRUKTUR SOWIE RAUMFLUGKÖRPER**
DEVICE FOR PROCESSING A STRUCTURE AND SPACECRAFT
DISPOSITIF DE TRAITEMENT D'UNE STRUCTURE AINSI QU'ENGIN SPATIAL

(30) Priorität: 18.12.2013 DE 102013021674
(43) Veröffentlichungstag der Anmeldung: 24.06.2015
(73) Patentinhaber: Airbus Defence and Space GmbH, 82024 Taufkirchen (DE)
(72) Erfinder: Mädiger, Bernd, 28325 Bremen (DE); Dörmer, Manfred, 28219 Bremen (DE); Langpap, Bernd, 28844 Weyhe (DE)
(74) Vertreter: Marschall, Stefan

(56) Entgegenhaltungen:
- EP-A1- 0 402 599
- EP-A1- 2 617 536
- EP-A1- 2 660 011
- EP-A2- 1 652 635
- DE-A1-102013 218 765

## Beschreibung

Die Erfindung betrifft einen Raumflugkörper zum Bergen und Warten von Satelliten und dergleichen nach dem Oberbegriff des Patentanspruchs 1.

Die Situation in der erdnahen Raumfahrt ist gegenwärtig durch zwei Herausforderungen gekennzeichnet. Zum einen ist die momentane Debris-Situation im Weltraum kritisch. Durch die stark angestiegene Dichte von Weltraummüll wächst die Gefahr neuer Kollisionen stetig. Selbst ohne neue Satellitenstarts, das heißt ohne die Einbringung neuer Objekte, würde die Menge an Debris durch Kollisionen weiter zunehmen. Zum anderen erscheint das sogenannte Servicing von ausgefallenen oder veralteten Satelliten oder anderen Raumfahrtinfrastrukturen immer attraktiver. Daraus ist zu entnehmen, dass On-Orbit-Servicing für eine Wartung und Verlängerung der Lebensdauer oder am Ende die Entsorgung von Weltraumschrott erforderlich ist. Häufig ergibt sich dabei die Schwierigkeit, dass die Zugänglichkeit zu beispielsweise Launch-Adaptern oder Tankanschlüssen der einzufangenden oder zu wartenden Komponenten durch abstehende oder verdeckende Strukturen wie Solarpaneln eingeschränkt ist, die somit vor der eigentlichen Servicing-Operation wie Betankungen erst entfernt werden müssen. Um die Erzeugung neuer Debris-Teile zu vermeiden, dürfen abgetrennte bzw. bezogen auf die Komponente freie Strukturteile keinesfalls freigelassen werden.

Die EP 1 652 635 A2 offenbart eine terrestrische Vorrichtung zum Bearbeiten von flächigen Bauteilen. Die Vorrichtung weist einen Halterahmen auf, an dem Anbindungselemente so um eine Bearbeitungseinrichtung angeordnet sind, dass keine Kräfte auf den Manipulator wirken. Die Anbindungselemente sind hierbei insbesondere als Sauger ausgebildet. Durch Druckstempel kann das Bauteil zum Bearbeiten gegen ein anderes Bauteil gespannt werden.

Die EP 0 402 599 A1 zeigt eine fernsteuerbare Arbeitsplattform für Verwendungen im Weltall. Die Arbeitsplattform weist einen großen Manipulatorarm und einen kleinen Manipulatorarm mit jeweils einem Armendeffektoren auf. Der kleine Manipulatorarm lässt sich mit dem großen Manipulatorarm verbinden um diesen zu unterstützen.

Aufgabe der Erfindung ist es, einen Raumflugkörper zum Bergen und Warten von Satelliten und dergleichen zu schaffen, der die vorgenannten Nachteile beseitigt und in der Lage ist, Strukturen sowohl zu greifen und zu bearbeiten, als auch freie Strukturteile in einer definierten Position zu halten.

Diese Aufgabe wird gelöst durch einen Raumflugkörper mit den Merkmalen des Patentanspruchs 1.

Ein erfindungsgemäßer Raumflugkörper zum Bergen und Warten von Satelliten und dergleichen hat einen eigenen Antrieb zur Fortbewegung, einen Manipulator und eine Vorrichtung zum Bearbeiten einer Struktur mit einer Schnittstelle zur Befestigung an dem Manipulator und mit zumindest eine Werkzeugaufnahme zur Aufnahme eines Werkzeugs. Bevorzugterweise ist die Vorrichtung lösbar an dem Manipulator montiert. Erfindungsgemäß sind zwei Greifer zum Greifen der zu bearbeitenden Struktur vorgesehen, wobei eine Werkzeugaufnahme zwischen den Greifern angeordnet ist und die Greifer zueinander verfahrbar sind. Die Greifer sind um eine Drehachse zueinander verschwenkbar. Die Greifer sind in Schließstellung stromlos vorgespannt und in ihrer Endlage verriegelbar.

Der erfindungsgemäße Raumflugkörper ermöglicht eine Vielzahl von Vorbereitungsarbeiten bei Servicing-Operationen durchzuführen und damit die eigentlichen Servicing-Aufgaben meist erst zu ermöglichen. Es wird also ein Raumflugkörper geschaffen, mittels dem sowohl Vorbereitungsaufgaben als auch die eigentlichen Servicing-Operationen einfach durchgeführt werden können. Der Raumflugkörper ermöglicht beispielsweise die Abtrennung und sichere Unterbringung von an Masten befestigten Solarpaneln, um so den Zugang zu den Launch-Adaptern beispielsweise zum Einleiten einer Deorbiting-Operation zu schaffen. Ebenso können mit dem Raumflugkörper beispielsweise Betankungen durchgeführt werden oder Reparaturen, beispielsweise ein Austausch eines beschädigten SolarpanelSolarpanels. Hierdurch wird eine einfache, kostengünstige und sichere Methode zum Einfangen und Beseitigen von ausgefallenen Satelliten geschaffen. Durch den eigenen Antrieb kann der Raumflugkörper aktiv zum Satelliten bewegt werden und aktiv sein Ausrichtung zur Struktur ändern, was das Greifen der Struktur vereinfacht.

Die Vorrichtung zeichnet sich dadurch aus, dass sie Greiffunktionen und Servicing-Funktionen in einem Element kombiniert. Die Vorrichtung erlaubt somit komplexe Operationen bei einarmigen Manipulatoren. In Abhängigkeit vom Werkzeug und vom Greiferdesign ermöglicht sie das Entfernen und das sichere Verstauen von Strukturteilen, sowie andersartige Bearbeitungen wie das Fügen von Strukturen, das sichere Halten von zu fügenden Strukturteilen, Betankungen und dergleichen. Darüber hinaus ermöglicht die Vorrichtung auch eine Anwendung in allen anderen industriellen Gebieten, in denen Arbeiten an einer Struktur vorgenommen werden müssen, wobei z.B. aus Platzgründen nur einarmige Roboter ohne weitere Unterstützungshalterungen wie in kerntechnischen oder chemischen Reaktoren im Einsatz sind. Die Vorrichtung ist durch die Werkzeugaufnahme und die Greifer so flexibel gestaltet, dass eine flexible Anpassung der Vorrichtung an die jeweils konkrete Anwendungssituation und Materialien möglich ist. Dabei stellt jeder Greifer nach dem Greifen eine stabile Verbindung zum jeweiligen Strukturteil dar, sei es zum abgetrennten Strukturteil oder zum an der Komponente verbleibenden Strukturteil. Das Design der Greifer ist frei wählbar.

Eine Verschwenkung ermöglicht eine vollständige Entfernung des abgetrennten Strukturteils aus einem Zugangsbereich zum Zielobjekt. Das abgetrennte Strukturteil kann quasi je nach Ausführung eines hierfür erforderlichen Drehgelenks neben dem verbleibenden Strukturteil gehalten werden. Alternativ zum Drehgelenk oder ergänzend sind die Greifer transversal zueinander verfahrbar.

Dadurch, dass die Greifer in ihrer Schließstellung stromlos vorgespannt sind, lässt sich ein versehentliches Öffnen der Greifer verhindern. Beispielsweise kann mittels eines Federelementes eine Vorspannkraft aufgebracht werden, die als Fail-Safe-Funktion, beispielsweise im unwahrscheinlichen Fall einer gestörten Stromversorgung der Greifer, ein automatisches Schließen der Greifer bewirkt und somit ein Freilassen der gegriffenen Struktur bzw. deren getrennten Teile verhindert.

Dadurch, dass die Greifer in ihrer Endlage verriegelbar sind, wird eine versehentliche Rückbewegung der Greifer aus ihrer Endlage relativ zueinander zu vermieden.

Wenn zusätzlich zur Verschwenkung mittels des Drehgelenks zumindest einer der Greifer einzeln verfahrbar ist, können die Greifer optimal zur jeweiligen Struktur ausgerichtet und somit diese optimal greifen können. Wenn zum Beispiel zumindest einer der Greifer entlang seiner Hochachse verfahrbar ist, können stufenartige Strukturen gegriffen werden. Wenn der zumindest eine der Greifer um seine Hochachse verschwenkbar ist, können in einer Ebene liegende winkelige Strukturen gegriffen werden. Selbstverständlich kann zumindest einer der Greifer auch um seine Hochachse verschwenkbar und entlang seiner Hochachse verfahrbar sein sowie weitere Freiheitsgrade hinsichtlich seiner Bewegung aufweisen.

Bevorzugterweise ist die Werkzeugaufnahme einzeln verfahrbar. Hierdurch kann die Werkzeugaufnahme optimal zur Struktur ausgerichtet werden. Die Position der Werkzeugaufnahme zum ergriffenen Struktur wird zwar grundsätzlich durch die Greifer bestimmt, jedoch ermöglicht die individuelle Verfahrbarkeit der Werkzeugaufnahme eine optimale Ausrichtung der Werkzeugaufnahme und somit eines Werkzeugs zur Struktur bzw. zum zu bearbeitenden Strukturabschnitt.

Bei einem Ausführungsbeispiel hat die Vorrichtung mehrere Werkzeugaufnahmen. Hierdurch ist die Vorrichtung gleichzeitig mit mehreren Werkzeugen bestückbar, so dass beispielsweise Fügearbeiten, bei dem ein Befestigungsmittel wie eine Schraube oder ein Fügezusatzstoff zugeführt werden muss, durchgeführt werden können. Durch die Vielzahl von Werkzeugaufnahmen können somit verschiedenste Arbeiten durchgeführt werden. Dabei ist es insbesondere vorteilhaft, wenn zumindest eine der Werkzeugaufnahmen ebenfalls die Aufnahme eines Greifwerkzeugs ermöglicht, so dass die Vorrichtung um zumindest einen weiteren Greifer ergänzt werden kann und beispielsweise Strukturelemente gekürzt werden können, wobei ein mittleres Strukturteil aus der Struktur herausgetrennt und anschließend deren verbleibenden beiden endseitigen Strukturteile aufeinander zubewegt und miteinander gefügt werden können.

Zur Durchführung einer Vielzahl von Bearbeitungsschritten bzw. Operationen ist es vorteilhaft, wenn die Vorrichtung ein Werkzeugmagazin aufweist. Ein Wechseln der Werkzeuge des Werkzeugmagazins erfolgt entweder über ein in das Werkzeugmagazin integrierten Werkzeugwechsler oder einen separaten Werkzeugwechsler.

Bevorzugterweise erfolgt die Energie- und/oder Datenversorgung der Vorrichtung über den Manipulator. Die Energie- und/oder Datenversorgung über den Manipulator ermöglicht einen Verzicht auf eine eigene Stromversorgung der Vorrichtung, wodurch beispielsweise die Zulassung der Vorrichtung vereinfacht wird. Zur Realisierung einer derartigen Energie- und/oder Stromversorgung kann die Vorrichtung eine Schnittstelle aufweisen, die mit einer entsprechenden Manipulatoraufnahme zusammenwirkt. Alternativ kann die Energie- und/oder Datenversorgung zwischen der Vorrichtung und dem Manipulator über Funk, Kabel und dergleichen erfolgen. Die Energieversorgung kann ersatzweise auch lokal über eine Batterie bereitgestellt werden. Der Manipulator mit seinem Regel- und Steuerungssystem kann dabei auch die Positionierung der Vorrichtung zur zu bearbeitenden Struktur übernehmen. Zudem kann die Werkzeugpositionierung und insbesondere auch die Werkzeugsteuerung durch die das Regel- und Steuerungssystem des Manipulators erfolgen. Um die Operationenvielfalt zu erhöhen kann der Raumflugkörper eine Ablegeeinrichtung zum Ablegen der Vorrichtung in einer Ruhelage und/oder ein Vorrichtungsmagazin zum Bereitstellen zumindest einer weiteren Vorrichtung aufweist. Die Ablegeeinrichtung ist dabei derart, dass die Vorrichtung mit einem gehaltenen Strukturteil aufgenommen werden kann. Die Ablegeeinrichtung für die verwendeten Vorrichtungen kann mit dem Vorrichtungsmagazin zum Bevorraten von weiteren Vorrichtungen zu einer Einheit zusammengefasst sein.

Die Anzahl der Vorrichtungen pro Raumflugkörper lässt sich reduzieren, wenn der Raumflugkörper eine Ablegeeinrichtung zum Ablegen von abgetrennten Strukturteilen und/oder ein Teilemagazin zum Bereitstellen von Strukturteilen aufweist. Hierdurch kann die Vorrichtung jeweils ein beispielsweise abgetrenntes Strukturteil ablegen und nach dem Ablegen ein neues Strukturteil ergreifen. Die Ablegeeinrichtung für die ausgetauschten Strukturteile kann mit dem Teilemagazin zum Bevorraten von neuen Strukturteilen zu einer Einheit zusammengefasst sein.

Sonstige vorteilhafte Ausführungsbeispiele der Erfindung sind Gegenstand weiterer Unteransprüche.

Im Folgenden werden bevorzugte Ausführungsbeispiele der Erfindung anhand stark vereinfachter schematischer Darstellungen näher erläutert. Es zeigen:
- Figur 1: einen prinzipiellen Aufbau eines Ausführungsbeispiels einer bevorzugten Vorrichtung,
- Figur 2: einen beispielhaften Greifer der Vorrichtung aus Figur 1,
- Figur 3: ein beispielhaftes Werkzeug der Vorrichtung aus Figur 1,
- Figur 4: ein beispielhaftes Drehgelenk der Vorrichtung aus Figur 1,
- Figur 5: eine perspektivische Darstellung der Vorrichtung aus Figur 1 in einer Ausgangslage,
- Figur 6: eine perspektivische Darstellung der Vorrichtung aus Figur 1 in einer Endlage,
- Figur 7: einen beispielhaften ersten Operationsablauf eines mit der Vorrichtung bestückten erfindungsgemäßen Raumflugkörpers,
- Figur 8: einen beispielhaften zweiten Operationsablauf eines mit der Vorrichtung bestückten erfindungsgemäßen Raumflugkörpers.

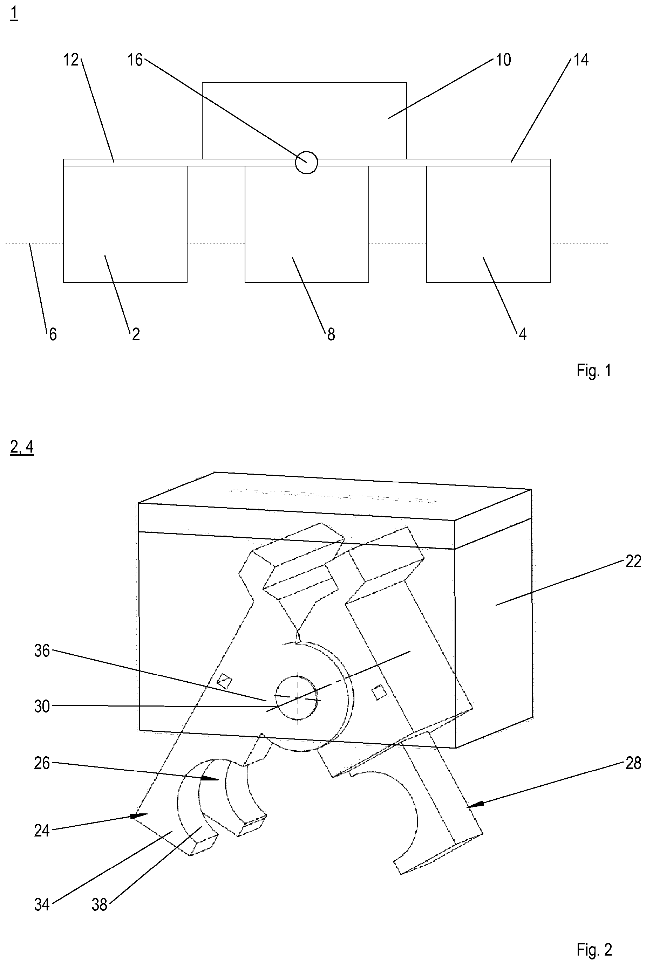

In Figur 1 ist ein prinzipieller Aufbau eines bevorzugten Ausführungsbeispiels einer bevorzugten Vorrichtung 1 gezeigt. Die Vorrichtung 1 ermöglicht Greiffunktionen und simultan Servicing-Funktionen mit einem Manipulator bzw. Roboter. Ein bevorzugtes Einsatzgebiet ist die Raumfahrt, wobei die Vorrichtung 1 an einem einarmigen Manipulator eines Raumflugkörpers wie ein Servicing-Satellit befestigt ist. Wesentliche Operationen der Vorrichtung 1 sind:
- Greifen und Halten,
- Trennen,
- Bewegen und Ablage, und
- Fügen.

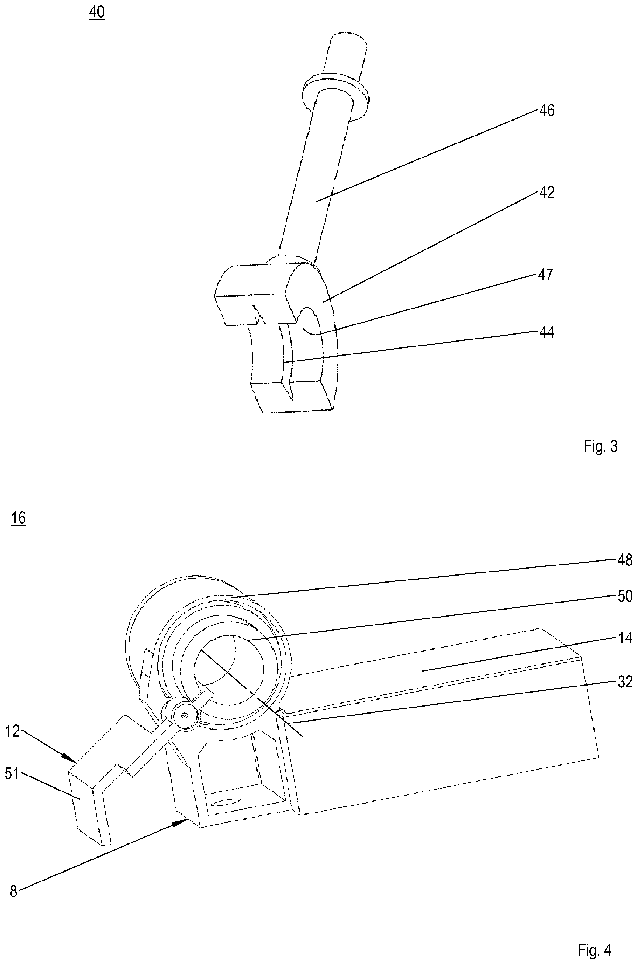

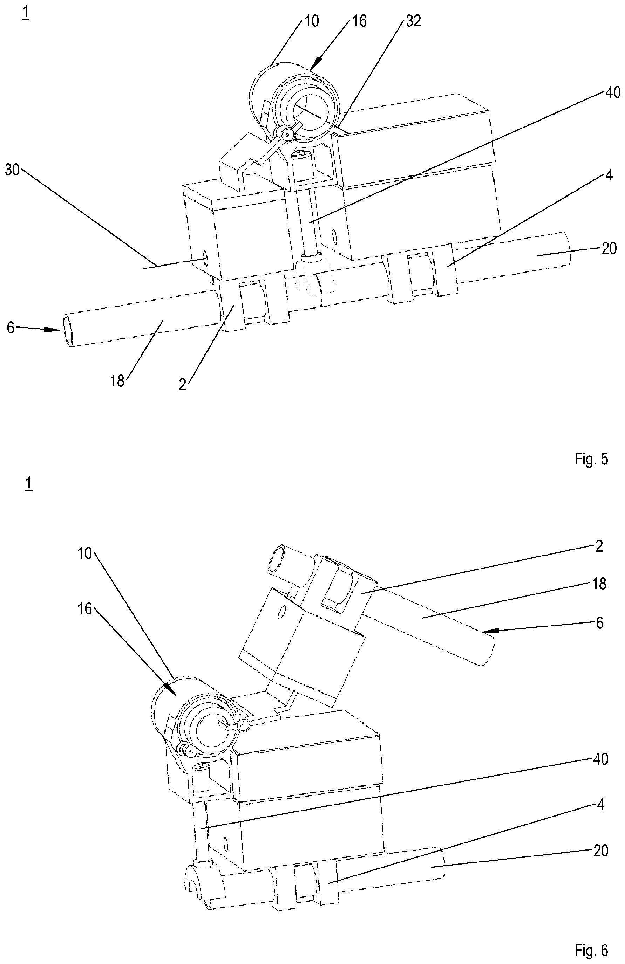

Die Vorrichtung 1 hat hier zwei Greifer 2, 4 zum Greifen und Halten einer Struktur 6, eine zwischen den Greifern 2, 4 angeordnete Werkzeugaufnahme 8 zur Aufnahme eines Werkzeugs 40 (siehe Figur 3), beispielsweise zum Trennen und/oder Fügen der Struktur 6, und eine Schnittstelle bzw. Kupplung 10 zur Verbindung mit dem Manipulator. Die beiden Greifer 2, 4 sind an jeweils einem Tragarm 12, 14 angebunden, die über ein Drehgelenk 16 verschwenkbar miteinander verbunden sind, so dass nach einem beispielhaften Trennen der Struktur 6 in einzelne Strukturteile 18, 20 (siehe Figur 6), das eine Strukturteil 18 relativ zum anderen Strukturteil 20 bewegt und/oder abgelegt werden kann.

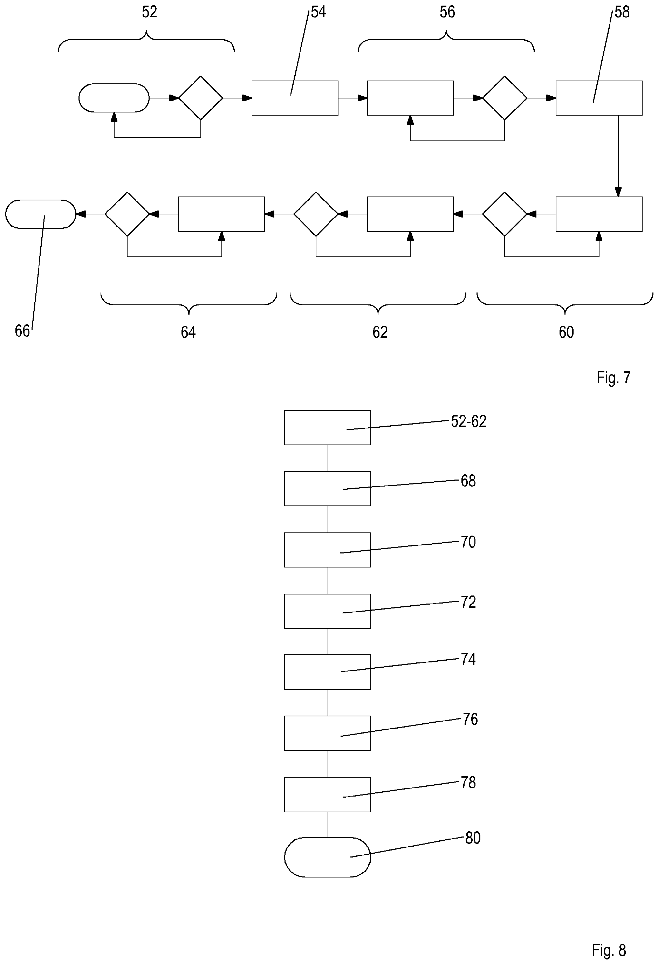

Aus Gründen der Übersichtlichkeit hat die Struktur 6 hier ein stabförmiges Profil. Beispielsweise ist die Struktur 6 in diesem Ausführungsbeispiel ein Solarpanelmast eines Satelliten. Das Solarpanel versperrt beispielsweise den Zugang zu einem Launch-Adapter zum Andocken des Raumflugkörpers am Satelliten zum Einleiten eines kontrollierten Deorbiting-Vorgangs. Zum Durchführen des Deorbiting-Vorgangs muss daher das Solarpanel entfernt werden, wobei es jedoch zur Vermeidung von Debristeilen nicht freigelassen werden darf (siehe auch Figur 7). Bei einem anderen Beispiel ist das Solarpanel beschädigt und gegen ein neues Solarpanel auszutauschen, der Satellit wird also repariert (siehe Figur 8). In Abhängigkeit vom Werkzeug und vom Greiferdesign ermöglicht die Vorrichtung 1 das Entfernen und das sichere Verstauen des abgetrennten Strukturteils 18, sowie andersartige Bearbeitungen wie das Fügen von Strukturteilen und das sichere Halten von Fügeteilen. Beispielsweise kann mittels des Raumflugkörpers auch ein Satellit betankt werden und dieser hierzu in seiner Werkzeugaufnahme 8 mit einem Betankungswerkzeug bestückt werden.

Wie in Figur 2 gezeigt, hat ein beispielhafter Greifer 2, 4 der Vorrichtung 1 ein Gehäuse 22 und drei Finger 24, 26, 28. Die Finger 24, 26, 28 sind um eine gemeinsame Schwenkachse 30 gelagert, die in dem hier gezeigten Ausführungsbeispiel orthogonal zur in Figur 5 gezeigten Drehachse 32 des Drehgelenkes 16 verläuft. Die Finger 24, 26, 28 sind derart zueinander angeordnet, dass zwei Finger 24, 26 in Richtung der Schwenkachse 30 als Parallelfinger nebeneinander und ein Finger 28 als Einzelfinger gegenüberliegend zu den Parallelfingern 24, 26 angeordnet ist. Dabei ist in Richtung der Schwenkachse 30 der Einzelfinger 28 abschnittsweise zwischen den Parallelfingern 24, 26 positioniert. Die Finger 24, 26, 28 haben jeweils einen Halteabschnitt 34 und einen Gelenkabschnitt 36. Der Halteabschnitt 34 ist entsprechend der zu greifenden Struktur 6 ausgebildet und in dem hier gezeigten Ausführungsbeispiel aufgrund des stangenartigen Profils der Struktur 6 mit einer konkaven Haltefläche 38 versehen. Der Gelenkabschnitt 36 nimmt den Halteabschnitt 34 auf und bildet die Schwenkachse 30.

In dem Gehäuse 22 ist ein nicht gezeigter Antrieb zum Bewegen der Finger 24, 26, 28 angeordnet. Die Gelenkabschnitte 36 der Finger 24, 26, 28 sind über einen nicht gezeigten Mechanismus mit dem Antrieb verbunden, der beispielsweise gegen eine Vorspannkraft eines nicht gezeigten Federelementes die Halteabschnitte 34 auseinanderdrückt und somit den Greifer 2, 4 öffnet. Der Greifer 2, 4 ist in Schließstellung über das Federelement vorgespannt, so dass es zum schnellen und sicheren Schließen der Greifer 2, 4 genügt, den Antrieb ab oder ein eventuelles Getriebe in Leerlauf zu schalten. Die Vorspannung in Schließstellung ermöglicht zum einen Abbruch, als auch ein Wiederholen eines Greifvorgangs in jeder Phase und einen sicheren Griff auch in einem stromlosen Zustand der Greifer 2, 4.

In Figur 3 ist ein beispielhaftes Werkzeug 40 zur Aufnahme in der Werkzeugaufnahme 8 gezeigt. Das Werkzeug 40 ist hier als ein Trennwerkzeug dargestellt, beispielsweise als ein eine Schneidladung aufnehmendes Werkzeug. Aufgrund des bevorzugten Einsatzgebietes der Vorrichtung in der Raumfahrt sind besondere Anforderungen an die Schneidladung zu stellen, wie eine positive Sauerstoffbilanz. Das Werkzeug 40 ist im in der Werkzeugaufnahme 8 eingesetzten Zustand zwischen den Greifern 2, 4 positioniert, so dass nach erfolgter Trennung beide Strukturteile 18, 20 immer noch sicher gegriffen sind. Das Werkzeug 40 hat hier einen Stempel 42 mit einer innenseitigen Aufnahme 44 zur Positionierung der Schneidladung und eine federbelastete Stange 46 zum Aufsetzen des Stempels 42 auf die Struktur 6 während des Greifvorgangs. Ein notwendiges Federelement zum Drücken des Stempels 42 gegen die Struktur 6 automatisch im gegriffenen Zustand ist nicht gezeigt. Durch Aktivierung der Schneidladung entsteht ein heißer Plasmastrahl, dessen Temperaturen neben einer Trennung der Struktur 6 zu einem Verdampfen von eventuell freien Strukturfragmenten führt, so dass nur geringe Strukturfragmente freigesetzt werden. Eine die Aufnahme 44 aufnehmende innenumfangsseitige Stempelfläche 47 des Stempels 42 ist an eine jeweilige Außenkontur der Struktur 6 angepasst und hier aufgrund des stabförmigen Profils der Struktur 6 bogenförmig.

Um das Freisetzen von Debris-Partikeln zu unterbinden, ist eine maschennetzförmige Abschirmung möglich, die die entstehenden Gase entweichen lässt, mögliches Debris aber sicher zurückhält.

In Figur 4 ist eine beispielhafte Ausführungsform des Drehgelenks 16 zum Verschwenken der beiden Greifer 2, 4 zueinander gezeigt. Das Drehgelenk 16 ermöglicht insbesondere eine definierte und kontrollierte Bewegung der beiden Greifer 2, 4 zueinander und damit auch der beiden getrennten Strukturteile 18, 20 zueinander. Das Drehgelenk 16 hat hier eine Außenhülse 48 und eine Innenhülse 50, die um die Drehachse 32 verschwenkbar ineinander geführt sind. An jeder Hülse 48, 50 ist einer der die Greifer 2, 4 aufnehmenden Tragarme 12, 14 befestigt. Das Drehgelenk 16 erlaubt in diesem Ausführungsbeispiel eine Verschwenkung der Greifer 2, 4 aus seiner gezeigten Ausgangslage um über 180° um die Drehachse 32, so dass das Strukturteil 18 vollständig aus einem Arbeitsbereich entfernt werden kann bzw. ein Arbeitsbereich am Satelliten wie ein Launch-Adapter oder ein Tankstutzen nach dem Wegklappen frei zugänglich ist. Der linke Tragarm 12 kann durch den großen Drehbereich des Drehgelenks 16 quasi kopfüber auf dem rechten Tragarm 14 abgelegt werden (Figur 6). Neben des hülsenartigen Aufbaus der Drehgelenks 16 wird dies dadurch erreicht, dass der linke Tragarm 12 einen Winkelabschnitt 51 zur Anbindung des Greifers 2 hat, der sich im montierten Zustand in Richtung des Greifers 2 erstreckt. Ein Antrieb des Drehgelenkes 16 erfolgt motorgetrieben, kann jedoch auch passiv, beispielsweise über eine Federelement, erfolgen. Um ein versehentliches Rückschwenken des verschwenkten Greifers 2, 4 zu verhindern, ist das Drehgelenk 16 zumindest in seiner maximalen Verstellposition, also in seiner Endlage, verriegelbar.

Zudem ist in Figur 4 die beispielhafte Werkzeugaufnahme 8 skizziert. Diese ist radial versetzt zur Drehachse 32 an der Außenhülse 48 des Drehgelenkes 16 angebunden und ermöglicht die Aufnahme einer Vielzahl von unterschiedlichen Werkzeugen 40. Die Werkzeugaufnahme 8 ist somit bevorzugterweise eine Standardaufnahme, die neben einer reinen Aufnahmefunktion des Werkzeugs 40 ebenfalls eine Energie- und/oder Datenversorgungsfunktion zum Manipulator bzw. vom Manipulator ermöglicht. Im Falle von einer Vielzahl von Werkzeugaufnahmen 8 ermöglich zumindest eine Werkzeugaufnahme 8 die Aufnahme eines Greifwerkzeugs zur Schaffung zumindest eines weiteren Greifers 2, 4. Die Werkzeugaufnahme 8 ist hier fest mit der Außenhülse 50 verbunden, allerdings kann die Werkzeugaufnahme 8 auch beweglich an der Außenhülse 48 angebunden sein und somit zu den Greifern 2, 4 und insbesondere zur ergriffenen Struktur 6 individuell ausrichtbar sein.

In den Figuren 5 und 6 ist eine perspektivische Darstellung der Vorrichtung 1 in der Ausgangslage (Figur 5) und der Endlage (Figur 6) gezeigt. Die Vorrichtung 1 ist dabei über seine in Figur 1 angedeutete Schnittstelle 10 am nicht gezeigten einarmigen Manipulator angebunden, beispielsweise am Handgelenkflansch. Die Schnittstelle 10 ist bei diesem Ausführungsbeispiel rückseitig am Drehgelenk 16 ausgebildet. Aufgrund der Vorderansicht des Drehgelenks 16 in den Figur 5 und 6 ist diese nicht näher zu erkennen. Sie ist eine Standardschnittstelle, die neben einer reinen mechanischen Verbindungsfunktion zum Manipulator ebenfalls eine Energie- und/oder Datenversorgungsfunktion zum Manipulator bzw. vom Manipulator ermöglicht. Die Schnittstelle ist zudem bevorzugterweise derart gestaltet, dass der Manipulator selbsttätig die Verbindung zur Vorrichtung herstellen und lösen kann. Der Manipulator übernimmt mit seinem Regel- und Steuerungssystem zudem bei diesem Ausführungsbeispiel die Positionierung der Vorrichtung 1 zur Struktur 6. Zudem übernimmt der Manipulator mit seinem Regel- und Steuerungssystem auch die Steuerung des Werkzeugs 40.

In Figur 7 ist ein prinzipieller erster Operationsablauf eines mit der Vorrichtung bestückten erfindungsgemäßen Raumflugkörpers gezeigt. Der Raumflugkörper verfügt über einen Manipulator, an dessen Arm die Vorrichtung 1 angebunden ist, und über einen eigenen Antrieb zum aktiven Bewegen im Raum. Bevorzugterweise ist der Raumflugkörper ein Service-Satellit zum Warten und Bergen von anderen Satelliten, zum Bergen von Debristeilen und dergleichen. In dem Folgenden Beispiel soll ein Erdbeobachtungssatellit mit einem Deorbiting-Impuls beaufschlagt werden und somit der Erdbeobachtungssatellit zum kontrollierten Absturz gebracht werden. Der Erdbeobachtungssatellit hat einen Launch-Adapter, an dem der Raumflugkörper zum Aufbringen des Deorbiting-Impulses andocken soll. Allerdings ist der Zugang zum Launch-Adapter von einem Solarpanel verdeckt ist.

Im Schritt 52 sucht der Raumflugkörper das Zielobjekt, hier den einzufangenden Erdbeobachtungssatellit, auf. Dann wird überprüft, ob ein lokalisiertes Objekt der Erdbeobachtungssatellit ist.

Wenn das lokalisierte Objekt der Erdbeobachtungssatellit ist, bewegt sich im Schritt 54 der Raumflugkörper mittels seines Antriebs auf den Erdbeobachtungssatellit zu.

Im Schritt 56 fängt der Raumflugkörper mittels der Greifer 2, 4 der Vorrichtung 1 den Erdbeobachtungssatellit ein, wobei er den Mast des Solarpanels 6 ergreift, das den Zugang zum Launch-Adapter versperrt. Anschließend wird die Greifverbindung überprüft.

Im Schritt 58, also nach dem ordnungsgemäßen Greifen des Erdbeobachtungssatelliten, wird das Werkzeug 40 vorbereitet bzw. in Betriebsbereitschaft versetzt.

Im Schritt 60 wird die Operation, hier das Abtrennen des den Zugang zum Launch-Adapter versperrenden Solarpanels 18 mittels des Werkzeugs 40 durchgeführt. Dann wird geprüft, ob das Trennen ordnungsgemäß erfolgte.

Im Schritt 62 wird das abgetrennte Solarpanel 18 über das Drehgelenk 16 zum Maststumpf 20 verschwenkt und somit der Zugang zum Launch-Adapter freigelegt. In der Endlage wird der verschwenkte Tragarm 12 arretiert und die Arretierung wird überprüft.

Im Schritt 64 dockt nun der Raumflugkörper am frei zugänglichen Launch-Adapter an und das Andocken wird überprüft. Der Raumflugkörper ist nun fest mit dem Erdbeobachtungssatelliten verbunden.

Im Schritt 66 leitet der Raumflugkörper den Deorbiting-Impuls ein. Als Ergebnis wird der Erdbeobachtungssatellit zum kontrollierten Absturz gebracht, wobei er im Verbund mit dem angedockten Raumflugkörper in der Erdatmosphäre verglüht.

In Figur 8 ist ein prinzipieller zweiter Operationsablauf eines mit der Vorrichtung 1 bestückten erfindungsgemäßen Raumflugkörpers gezeigt. Die Markierung einzelner Elemente als ein Bezugszeichen mit einem Strich (1', 2', 4', 18', 40') dient dem besseren Verständnis der Figur 8. Diese Bezugszeichen finden sich jedoch in keiner der Figuren, sondern nur in der Beschreibung zur Figur 8. In diesem Operationsablauf wird das Ersetzen eines beschädigten Solarpanels 18 eines Erdbeobachtungssatelliten durch ein neues Solarpanels 18' beschrieben. Insbesondere wird das neue Solarpanel 18' am dem Maststumpf 20 des beschädigten Solarpanels 18 angefügt, der nach dem Abtrennen des beschädigten Solarpanels 18 am Satelliten stehen bleibt. Ein hierfür verwendeter Raumflugkörper weist in diesem Ausführungsbeispiel zumindest zwei Vorrichtungen 1, 1' auf, von denen zumindest eine in einem entsprechenden Vorrichtungsmagazin des Raumflugkörpers bis zu ihrem Einsatz vorgehalten wird. Die Vorrichtungen 1, 1' sind vorzugsweise mit unterschiedlichen Werkzeugen 40, 40' bestückt. Zudem hat der Raumflugkörper zumindest eine Ablegeeinrichtung zum Ablegen einer ein Strukturteil 18 haltenden Vorrichtung 1 in einer Ruhelage, hier zum Ablegen der ein abgetrenntes Strukturteil 18 aufnehmenden Vorrichtung 1. Alternativ oder auch ergänzend kann der Raumflugkörper eine Ablegeeinrichtung zum alleinigen Ablegen des ausgetauschten Strukturteils 18 und ein Werkzeugmagazin aufweisen. In einem solchen Fall kann eine Vorrichtung 1 mit unterschiedlichen Werkzeugen 40, 40' bestückt werden, so dass sich sämtliche Operationen mit nur einer Vorrichtung 1 durchführen lassen. Zudem hat der Raumflugkörper hier ein Teilemagazin zum Bevorraten von neuen Strukturteilen 18'.

Die Schritte 52 bis 62 entsprechen den in Figur 7 beschriebenen Schritten 52 bis 62, so dass wiederholende Erläuterungen entfallen. Das beschädigte Solarpanels 18 wurde mittels des Werkzeugs 40 abgetrennt und das beschädigte Solarpanel 18 wurde verschwenkt, um hier den Zugang zum Maststumpf 20 zu schaffen (Schritte 60 und 62).

Im Schritt 68 wird der die Vorrichtung 1 aufnehmende einarmige Manipulator nun so angesteuert, dass die Vorrichtung 1 in einer Ablegevorrichtung am Raumflugkörper abgelegt wird.

Danach nimmt im Schritt 70 der nun freie Manipulator eine neue Vorrichtung 1' aus einem Vorrichtungsmagazin des Raumflugkörpers auf. Die neue Vorrichtung 1' ist mit einem Werkzeug 40' versehen, dass das Fügen ermöglicht.

Im Schritt 72 entnimmt die Vorrichtung 1' mittels einer ihrer Greifer 2' das neue Solarpanel 18' aus dem Teilemagazin des Raumflugkörpers. Wenn vorteilhaft zur Aufnahme des Solarpanels 18', kann hierzu der Greifer 2' zum Greifer 4' verschwenkt werden.

Im Schritt 74 wird die Vorrichtung 1' über den Manipulator zum Maststumpf 20 bewegt und die Vorrichtung 1' umgreift diesen mit ihrem freien Greifer 4'.

Im Schritt 76 wird das neue Solarpanel 18' über eine Verschwenkung um das Drehgelenk 16 in eine Fügeposition zum Maststumpf 20 gebracht.

Dann wird im Schritt 78 das Werkzeug 40' angesteuert, der Fügeprozess durchgeführt und überprüft.

Im Schritt 80 öffnet die Vorrichtung 1' die Greifer 2', 4', woraufhin die Verbindung zum Erdbeobachtungssatelliten aufgehoben wird. Dann wird der Antrieb betätigt und der Raumflugkörper entfernt sich vom reparierten Erdbeobachtungssatelliten.

Abschließend wird die Vorrichtung 1' in der Ablegeeinrichtung verstaut. Der Raumflugkörper ist nun bereit für eine neue Servicing Operation.

Offenbar sind eine Vorrichtung zum Bearbeiten einer Struktur mit einer Schnittstelle zur Befestigung an insbesondere einem einarmigen Roboter, wobei das Werkzeug sowohl Greiffunktionen als auch Servicing-Funktionen vereint und hierzu zumindest zwei Greifer zum Greifen der zu bearbeitenden Struktur und zumindest eine zwischen den Greifern angeordnete Werkzeugaufnahme aufweist, sowie ein Raumflugkörper mit einer derartigen Vorrichtung.

### Bezugszeichenliste

- 1, 1': Vorrichtung
- 2, 2': Greifer
- 4, 4': Greifer
- 6: Struktur
- 8: Werkzeugaufnahme
- 10: Schnittstelle
- 12: Tragarm
- 14: Tragarm
- 16: Drehgelenk
- 18, 18': Strukturteil / Solarpanel
- 20: Strukturteil / Maststumpf
- 22: Gehäuse
- 24: Finger
- 26: Finger
- 28: Finger
- 30: Schwenkachse
- 32: Drehachse
- 34: Halteabschnitt
- 36: Gelenkabschnitt
- 38: Haltefläche
- 40, 40': Werkzeug
- 42: Stempel
- 44: Aufnahme
- 46: Stange
- 47: Stempelfläche
- 48: Außenhülse
- 50: Innenhülse
- 51: Winkelabschnitt
- 52 bis 80: Verfahrensschritte

## Patentansprüche

1. Raumflugkörper zum Bergen und Warten von Satelliten und dergleichen, mit einem eigenen Antrieb zur Fortbewegung, einer Vorrichtung (1) zum Bearbeiten einer Struktur (6) und mit einem Manipulator, an dem die Vorrichtung (1) montiert ist, wobei die Vorrichtung (1) eine Schnittstelle (10) zur Befestigung an dem Manipulator, eine Werkzeugaufnahme (8) zur Aufnahme eines Werkzeugs (40) und zwei Greifer (2, 4) zum Greifen und Halten der zu bearbeiteten Struktur (6) hat, wobei die Werkzeugaufnahme (8) zwischen den Greifern (2, 4) angeordnet ist und die Greifer (2, 4) zueinander verfahrbar sind, und wobei die Greifer (2, 4) um eine Drehachse (32) zueinander verschwenkbar sind, Finger (24, 26, 28) der Greifer (2, 4) in Schließstellung stromlos vorgespannt sind und die Finger (24, 26, 28) der Greifer (2, 4) zumindest in einer Endlage verriegelbar sind.

2. Raumflugkörper nach Anspruch 1, wobei die Greifer (2, 4) zusätzlich zur Bewegung um die Drehachse (32) relativ zueinander verfahrbar sind.

3. Raumflugkörper nach Anspruch 1 oder 2, wobei die Werkzeugaufnahme (8) einzeln verfahrbar ist.

4. Raumflugkörper nach einem der vorhergehenden Ansprüche, wobei die Vorrichtung (1) mehrere Werkzeugaufnahmen (8) hat.

5. Raumflugkörper nach einem der vorhergehenden Ansprüche, wobei die Vorrichtung (1) ein Werkzeugmagazin hat.

6. Raumflugkörper nach einem der vorhergehenden Ansprüche, wobei eine Energie- und/oder Datenversorgung der Vorrichtung (1) über den Manipulator erfolgt.

7. Raumflugkörper nach einem der vorhergehenden Ansprüche, wobei der Raumflugkörper eine Ablegeeinrichtung zum Ablegen der Vorrichtung (1) in einer Ruhelage und/oder ein Vorrichtungsmagazin zum Bereitstellen zumindest einer weiteren Vorrichtung (1') aufweist.

8. Raumflugkörper nach einem der vorhergehenden Ansprüche, wobei der Raumflugkörper eine Ablegeeinrichtung zum Ablegen von abgetrennten Strukturteilen (18) und/oder ein Teilemagazin zum Bereitstellen von Strukturteilen (18') aufweist.

## Claims

1. A spacecraft for the recovery and maintenance of satellites and similar, with its own drive for purposes of locomotion, a device (1) for purposes of working on a structure (6), and with a manipulator, on which the device (1) is mounted, wherein
the device (1) has an interface (10) for attachment to the manipulator, a tool holder (8) for the accommodation of a tool (40), and two grippers (2, 4) for purposes of gripping and holding the structure (6) to be worked on, wherein
the tool holder (8) is arranged between the grippers (2, 4), and the grippers (2, 4) can be moved towards each other, and wherein
the grippers (2, 4) can be pivoted towards each other about an axis of rotation (32), fingers (24, 26, 28) of the grippers (2, 4) are pre-loaded in the closed position in the unpowered state, and the fingers (24, 26, 28) of the grippers (2, 4) can be locked in at least one end position.

2. The spacecraft in accordance with claim 1, wherein
in addition to the movement about the axis of rotation (32) the grippers (2, 4) can be moved towards each other.

3. The spacecraft in accordance with claim 1 or 2, wherein
the tool holder (8) can be independently traversed.

4. The spacecraft in accordance with one of the preceding claims, wherein
the device (1) has a plurality of tool holders (8).

5. The spacecraft in accordance with one of the preceding claims, wherein
the device (1) has a tool magazine.

6. The spacecraft in accordance with one of the preceding claims, wherein
the supply of energy and/or data to the device (1) takes place via the manipulator.

7. The spacecraft in accordance with one of the preceding claims, wherein
the spacecraft has a placement device for the placement of the device (1) in a rest position, and/or a device magazine for the provision of at least one more device (1').

8. The spacecraft in accordance with one of the preceding claims, wherein
the spacecraft has a placement device for the placement of separated structural parts (18), and/or a parts magazine for the provision of structural parts (18').

## Revendications

1. Objet spatial pour abriter et entretenir des satellites et similaires, comprenant son propre entraînement pour avancer, un dispositif (1) pour traiter une structure (6) et un manipulateur sur lequel le dispositif (1) est monté, dans lequel le dispositif (1) a une interface (10) pour la fixation sur le manipulateur, un porte-outils (8) pour recevoir un outil (40) et deux grappins (2, 4) pour saisir et maintenir la structure (6) à traiter, dans lequel le porte-outils (8) est disposé entre les grappins (2, 4) et les grappins (2, 4) peuvent être déplacés l'un par rapport à l'autre, et dans lequel les grappins (2, 4) peuvent être pivotés l'un par rapport à l'autre sur un pivot (32), des doigts (24, 26, 28) des grappins (2, 4) sont accouplés sans courant en position de fermeture et les doigts (24, 26, 28) des grappins (2, 4) sont verrouillables dans au moins une position d'extrémité.

2. Objet spatial selon la revendication 1, dans lequel les grappins (2, 4) peuvent en plus être déplacés l'un par rapport à l'autre pour se déplacer sur le pivot (32).

3. Objet spatial selon la revendication 1 ou 2, dans lequel le porte-outils (8) peut être déplacé individuellement.

4. Objet spatial selon l'une des revendications précédentes, dans lequel le dispositif (1) a plusieurs porte-outils (8).

5. Objet spatial selon l'une des revendications précédentes, dans lequel le dispositif (1) a un magasin d'outils.

6. Objet spatial selon l'une des revendications précédentes, dans lequel une fourniture d'énergie et/ou de données au dispositif (1) a lieu par le biais du manipulateur.

7. Objet spatial selon l'une des revendications précédentes, dans lequel l'objet spatial présente un dispositif de placement pour placer le dispositif (1) dans une position de repos et/ou un magasin de dispositifs pour fournir au moins un autre dispositif (1').

8. Objet spatial selon l'une des revendications précédentes, dans lequel l'objet spatial présente un dispositif de placement pour placer des pièces de structure (18) séparées et/ou un magasin de pièces pour fournir des pièces de structure (18').
